# EUROPEAN PATENT SPECIFICATION

(11) **EP 3 628 468 B1**
(45) Date of publication and mention of the grant of the patent: **04.05.2022**
(21) Application number: 19182549.6
(22) Date of filing: 26.06.2019
(51) Int. Cl.: B29C 48/02, B29C 48/25, B29C 48/29, B29C 48/295, B29C 48/72, B29C 48/285, B29C 48/00, B29C 64/106, B29C 64/209, B29C 64/40, B33Y 10/00, B33Y 30/00, B28B 1/00, B28B 3/20, B28B 7/34

(54) **DEVICE FOR CREATING SUPPORTS, FORMWORKS, CONSTRUCTIONS OR STRUCTURES MADE OF FOAMED PLASTICS**
VORRICHTUNG ZUR ERZEUGUNG VON AUS GESCHÄUMTEN KUNSTSTOFFEN HERGESTELLTEN TRÄGERN, KONSTRUKTIONEN, FORMKÖRPERN ODER STRUKTUREN
DISPOSITIF POUR LA FABRICATION DE SUPPORTS, DE COFFRAGES, DE CONSTRUCTIONS OU DE STRUCTURES EN MOUSSE PLASTIQUE

(30) Priority: 27.09.2018 PL 42721218
(43) Date of publication of application: 01.04.2020
(73) Proprietor: REbuild Sp. z o.o., 15-540 Bialystok (PL)
(72) Inventor: Rzadkowski, Witold Wojciech, 05-825 Grodzisk Mazowiecki (PL); Perz, Rafal Andrzej, 11-400 Ketrzyn (PL); Suprynowicz, Karol, 16-200 Dabrowa Bialostocka (PL); Waldykowski, Michal, 04-696 Warszawa (PL); Kowalik, Michal Piotr, 05-825 Grodzisk Mazowiecki (PL)
(74) Representative: AOMB Polska Sp. z.o.o.

(56) References cited:
- EP-A1- 3 378 619
- WO-A1-2013/064826
- WO-A2-2015/065936
- US-A1- 2013 295 338
- US-A1- 2016 347 000

## Description

The object of the invention are the device and method for the creating of supports, formworks, and structures made of foamed plastics, and the method for the creating of constructions, which can be used especially for the incremental creation of concrete structures, as well as the device and method for the creating of constructions, especially those made of concrete.

A system for additive printing, which allows to create three-dimensional structures by extrusion, including with the possible use of foaming substances, is known from European patent EP3081364 B1. However, this document does not in any way consider the use of this technology when creating concrete structures.

US patent application US2017106592 A1 describes the challenges of creating concrete buildings using 3D printing technology. It is proposed to pour concrete mix over previously formed moulds that are created by the spraying of foamed materials. However, the disadvantage of such a solution is the necessity (indicated in the document) to process the surface of the created moulds later, in order to align them to an acceptable level - which makes it necessary to use an additional tool. A similar solution is the object of the patent application US2016001461 A1, which additionally considers various methods for easy removal of the created moulds/supports, including by dissolving the material of a support (e.g. wax) at an increased temperature so as to recover at least some of the material. However, neither document considers the various aspects of foaming the material that is intended for the mould/support, and neither document allows complete freedom and ease of use of various materials intended for supports/moulds.

American application US 2013/295338 discloses a device, that comprises a nozzle that sprays foam, layer by layer, to fabricate a fabricated object according to a CAD model, and a subtractive fabrication tool removes material from the fabricated object according to a CAD model. The fabricated object comprises a mold or an interior form. The foam may be low-density, high strength and fast-curing. The foam may be used for large-scale 3D printing. For example, the foam may be used to 3D print molds for walls of homes. The foam molds may be left in place, after casting concrete in the molds, to serve as insulation.

International application WO2013/064826 discloses an apparatus for performing a multi-layer construction method using cementitious material has a reservoir for containing cementitious material. The reservoir is coupled to a print head with a delivery nozzle. The delivery nozzle can be moved by a robotic arm assembly to index the nozzle along a predetermined path. Flow of the cementitious material from the reservoir to the nozzle and to extrude the material out of the nozzle is controlled in conjunction with indexing of the nozzle. A support material, an accelerating agent and a cartilage material may also be deposited from the print head.

American application US2016/347000 discloses a device and method manufacture an object for a user by fused deposition. A screw conveyor conveys a plurality of solid thermoplastic pellets from a hopper to a barrel. A heating element, coupled to the barrel, melts the solid thermoplastic pellets within the barrel, thereby producing a thermoplastic liquid. The thermoplastic liquid is extruded through a nozzle that caps one end of the barrel, the extruded thermoplastic liquid thereafter solidifying into the object. A computerized control system controls both a flow rate of the thermoplastic liquid, by adjusting rotation of a motor coupled to the screw conveyor, and a position of the nozzle above the build surface according to a three-dimensional shape of the object. The device and method are particularly suited for mass production of customized shoes and other objects, whereby thermoplastic material can be easily combined with customized colorants and blowing agents.

European application EP3378619 discloses a method for computer-aided production of 3-dimensional foam structures, in which a mixture of a polymer material and a blowing agent is transported within an extrusion unit to a nozzle arranged on the extrusion unit, the mixture of polymer material and blowing agent is supplied within the extrusion unit thermal energy, the mixture is extruded through the nozzle under increased pressure, the mixture is voxel-wise discharged onto a printing pad according to a predetermined 3D computer model, the position of the printing pad to the nozzle arranged at a distance from it, can be varied in three dimensions and, by controlling the proportion of blowing agent and / or the input of thermal energy and / or the discharge rate, an adjustment of the density and the height and width of a voxel of the foam structure that has been carried out during the production process according to vo The given 3D computer model is realized. It also relates to a device for computer-aided generation of 3-dimensional foam structures.

The purpose of the invention is to provide a device and method for the creating of building supports that would be easily usable when creating constructions using 3D printing techniques.

The object of the invention is the device for the creating of supports, formworks, or structures made of foamed plastic, designed to be placed on a controlled manipulator, having means for the supplying of plastic, especially plastic in the form of pellets, such as a storage container, or means for pneumatic transport, a screw extruder sleeve, especially a heated one, an extruder screw, a blowing agent feeding assembly, and preferably an outlet nozzle located at the end of the extruder sleeve, wherein the blowing agent feeding assembly includes a compressor, possibly with a buffer tank, a pump, or means adapted to the supplying of the blowing agent from outside the device, where this assembly is adapted to the supplying of the blowing agent as compressed gas, liquid, or supercritical liquid, where the device is configured so that, under normal use, in the extruder sleeve the blowing agent is mixed with the plastic, and at the extruder outlet the blowing agent expands and the physical foaming of the plastic occurs, wherein the device further includes an outlet nozzle placed at the end of the extruder sleeve characterized in that it further includes a return channel whose one end connects with the extruder sleeve at a place before the outlet nozzle, as well as an extruder nozzle closing element.

Preferably, the device additionally has a dye storage container or means for the supplying of dye from outside the device that are connected to the extruder sleeve.

Preferably, the device additionally has a concrete mortar depositing nozzle.

Preferably, the device additionally has a solvent spraying assembly.

Preferably, the device additionally has an air supplying assembly, which preferably has means for the heating and/or cooling of the air stream.

Preferably, the device additionally has a separation layer depositing assembly, especially in the form of a powder storage container and a vibratory conveyor, or a pneumatic atomizer.

Preferably, the device has means for the levelling of the surface of the foamed plastic being deposited, especially in the form of a cutting or heating tool, where these means are preferably located near the end of the outlet nozzle.

### The invention will now be presented in more detail using a preferable embodiment, with reference to the enclosed drawings, where:

Fig. 1 presents an embodiment of the device according to the invention, during the creation of supports made of foamed plastic, and
Fig. 2 presents the realization of the device according to the invention according to one of the preferable embodiments.

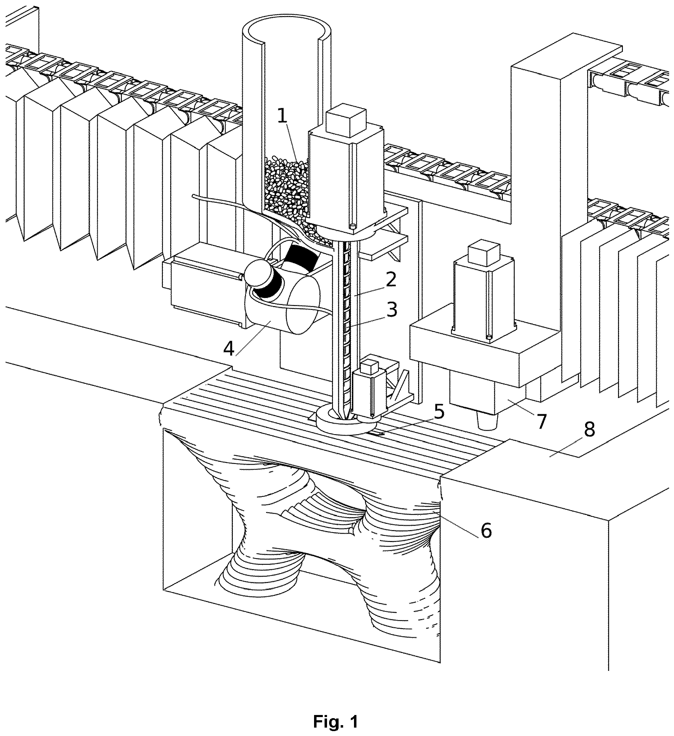

The device for the creating of supports according to the invention uses the technique of extrusion of materials that become physically foamed. Fig. 1 shows the screw extruder, which has the extruder sleeve (2) in which the extruder screw (3) rotates.

The extruder sleeve (2) and the extruder screw (3) are made of a material that must be chemically inert to the substances that may possibly be introduced into it, as well as adequately resistant to any mechanical loads resulting from the need to achieve high pressures (in order to be able to physically foam the plastic) and adequately resistant to any high temperatures resulting from the need to plasticize the plastics. The sleeve (2) and the screw (3) can be made of the same material or of different materials, according to the expected operating conditions. Preferably, they are made of steel, especially stainless steel.

The extruder additionally has means for heating the material being moved through the extruder sleeve (2), so that the material being foamed inside the extruder can be plasticized. Various types of heaters can be used, in particular electric heaters built into the walls of the extruder sleeve (2), built into the extruder screw (3), or coming into contact with the extruder sleeve (2) from its outside. The heaters can be, e.g., resistance heaters, or they can be made of Peltier cells or any other elements that are able to generate heat in a controlled manner.

The means for the supplying of plastic to be used by the device according to the invention reach the upper part of the extruder sleeve (2), where this plastic is preferably supplied in the form of pellets (1). The pellets (1) can be supplied to the extruder sleeve in various ways, according to the desired configuration of the device. In one of the embodiments, the pellets (1) may be held in a storage container from which they would fall into the extruder sleeve (2). Optionally, the falling of the pellets could be controlled by applying a vibratory conveyor. In another embodiment, the pellets could be pressed into the extruder sleeve (2) by means of a feeding screw. In yet another embodiment, the pellets (1) - after leaving the storage container but before entering the extruder sleeve (2) - can be pre-plasticized (liquefied) e.g. by heating. With this solution, it is then possible to force the plasticized material into the extruder sleeve (2) by means of a pump. In another embodiment, the pellets (1) can be held in a storage container distanced from the extruder, and be supplied to the extruder sleeve (2) with the use of means for pneumatic transport. In yet another example, the material intended to be used by the extruder can be supplied to the extruder sleeve (2) via hoses, in liquid form.

Preferably, the material supplied to the extruder is plastic, especially thermoplastic, especially in the form of pellets (1), where said plastic can preferably be a material from the group that includes polystyrene, polylactide, arboform, PET, and polypropylene.

From the point of view of the invention, the material supplied to the extruder may come from recycling (e.g. from PET bottles) - in one of the embodiments, it is possible to replace the storage container for the pellets (1) with a shredding device, thanks to which both popular waste (e.g. bottles) and parts of foamed plastic supports/formworks/structures previously created by the device according to the invention could be recycled.

Preferably, the means for the supplying of plastic also include a block/valve/closure, thanks to which it is possible at any time to start or block any further supply of the plastic to the extruder sleeve (2).

Another important element of the device according to the invention is the blowing agent feeding assembly (4), which feeds especially compressed gas or supercritical liquid. This assembly (4) can include (according to the needs): a compressor, a compressor with a buffer tank (to stabilize the pressure), a pressure gas / supercritical liquid tank, a pump, a pump with a buffer tank. In some embodiments, the blowing agent feeding assembly (4) may include within the device only the hoses/channels through which the blowing agent is to be supplied to the extruder sleeve (2), and the compressor / pump / pressure tank may be located away from the extruder (e.g. when the extruder is located at the end of a robot's arm, the compressor / pump / tank may be located at the base of this robot's arm). It is obvious that when selecting the specific elements to create the blowing agent feeding assembly (4), it is necessary to ensure that these elements are sufficiently resistant, especially to pressure - in some applications, it may be preferable to supply the agent at a pressure of even approx. 250 bar.

Preferably, the blowing agent feeding assembly has a valve / check valve / block so as to prevent the plastic from passing from the extruder sleeve (2) to the blowing agent feeding assembly (4) at a time when this would be undesirable (e.g. when the pump / compressor is stopped, or when the pressure hoses lose their tightness).

Preferably, the blowing agent is selected so that it is chemically inert to the plastic being used - the blowing agent may be a gas, a liquid (e.g. fluoro-hydrocarbons, compressed freon), or a supercritical liquid. In many applications, the blowing agent may be carbon dioxide, nitrogen, or even atmospheric air.

Due to the need to achieve/maintain high pressure in the extruder sleeve, it is possible to use an extruder screw (3) with a core diameter that increases lengthwise (towards the extruder outlet), or to make the pitch of the extruder screw (3) denser towards the extruder outlet.

The extruder is typically ended with an outlet nozzle, which is shaped in such a way that expansion of the blowing agent dissolved in / mixed with the plastic occurs in said nozzle, thanks to which the plastic becomes physically foamed and leaves the outlet nozzle in foamed form.

Preferably, the device according to the invention is placed on a controlled manipulator, e.g., on a system of guides or on a robotic arm. An optional element of the device can be a concrete mortar depositing nozzle (7). Such a nozzle (7) can be supplied with concrete mortar through a hose / channel feeding the mortar, e.g., from a concrete mixer (either standalone or mounted on a truck), but it can also - especially if erecting large constructions and if the device is large-sized - have a reservoir of concrete mortar within the device according to the invention (both near the concrete mortar depositing nozzle (7) and near the base of the system of guides / the base of the robot). The advantage of using a single device that could first create supports/formworks/structures made of foamed plastic, and then pour concrete mortar over them, is that it eliminates the risk of a collision between two independent devices, since only one device needs to be delivered to the building site.

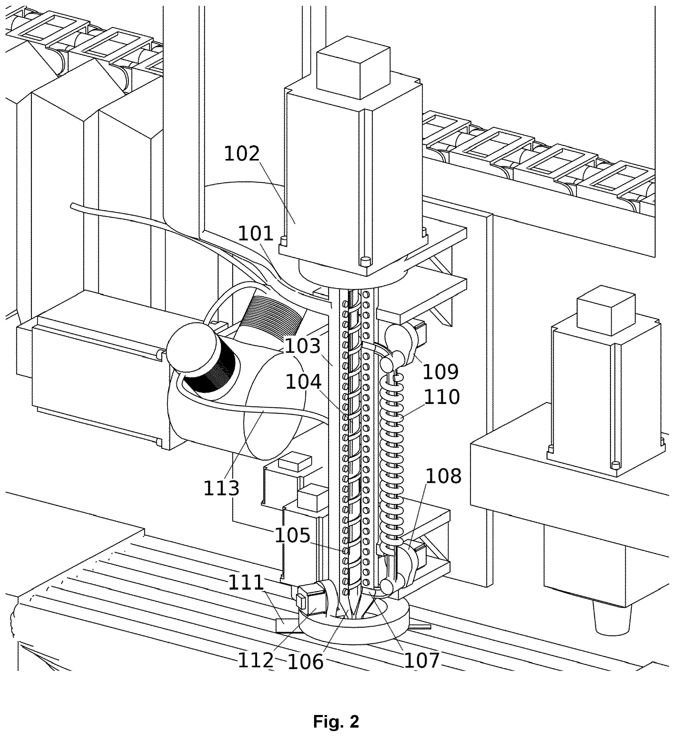

In one of the preferable embodiments presented in Fig. 2, the device according to the invention has the following parts:
- storage container for the pellets (101), which is located near the extruder sleeve (103);
- motor/servomotor (102), which can have a gear, especially a planetary gear, and which drives the extruder;
- extruder sleeve (103), which has a heater (105) located in the casing of the sleeve (103);
- extruder screw (104), which preferably has a mixing section;
- heater (105) in the form of a spiral, which runs almost along the entire length of the extruder sleeve (103);
- extruder nozzle (106);
- extruder return channel (107), whose inlet may be connected to the sleeve (103) near the nozzle (106), and whose outlet may be connected to the sleeve (103) in the part of the extruder near the place where the pellets are supplied;
- solenoid valve or servovalve (108) for opening/closing the inlet to the extruder return channel (107);
- solenoid valve or servovalve (109) for opening/closing the outlet of the extruder return channel (107);
- return channel heater (110) for preventing the plastic from solidifying in the extruder return channel (107);
- means for the levelling of the surface of the foamed plastic being deposited, preferably in the form of a smoothing tool (111), especially a cutting or melting tool;
- smoothing tool drive (112);
- blowing agent feeding assembly (113);
wherein it is obvious that the device also has means for communicating with the control device and means for being supplied with power, but this is obvious to experts in the field, and will not be described in more detail.

Preferably, the motor/servomotor (102) can have adjustable rotational speed, making it possible to adjust the operating speed of the device (the output of the processed plastic).

In order to ensure proper mixing of the plastic with the blowing agent, a part of the extruder screw may have a mixing section, cooperating with the mixing chamber, being a part of the sleeve (103) and located before the extruder nozzle (106). In another preferable embodiment, the mixing chamber may be passive (without a mixing element connected to the screw (104)), e.g. it may be a labyrinth chamber.

The heater (105), located in the sleeve, can preferably be a resistance coil, whose heating power is directly dependent on the parameters of the supply current. The heater (105) can be a single continuous heater, or it can consist of several heaters placed next to each other along the sleeve (103) power-supplied separately or connected in series - such a configuration can be preferable in a situation where it would be advisable to, e.g., heat the plastic incrementally (e.g. first only to plasticize the plastic, and then - already within the sleeve where the blowing agent has been supplied - more intensely in order to achieve the condition of maximum solubility of the blowing agent in the plastic).

Preferably, the extruder sleeve (103), the return channel (107), and the outlet nozzle (106) can be equipped with means for measuring the temperature, e.g. thermocouples. Such means for measuring the temperature are preferably located at multiple places so as to collect information about the condition of the plastic or blowing agent - this is particularly useful in the area of the outlet from the extruder sleeve (103) (or the outlet nozzle 106 - if present), because during the expansion of the blowing agent (and possibly during the boiling of the blowing agent when it is a liquid), the blowing agent absorbs significant amounts of heat which, in turn, may cause excessive cooling of the plastic being foamed and its premature hardening. This can be compensated for by the heater (105) or by additional heating means located in the area of the outlet from the extruder sleeve (103) or the outlet nozzle (106). Preferably, the heater (105) or other additional heating means may be combined with the means for measuring the temperature so that the heater (105) or the additional heating means can operate in a feedback loop, e.g. using PID regulators.

The return channel (107) is a modification that ensures more flexible operation of the device according to the invention. For example, if the device has created a support/formwork/structure and then the device is being moved to another location, it is not desirable for the outlet nozzle (106) to discharge foamed plastic (unnecessary loss of material and possible 'soiling' of the construction being created). In such a situation, by activating the solenoid valve / servovalve (108), the flow through the extruder nozzle (106) may be closed, and the flow through the return channel (107) may be opened. It is obvious that - simultaneously with the opening of the flow through the return channel (107) - it is necessary to activate the servovalve / solenoid valve (109), which allows the plastic from the return channel (107) to be reintroduced into the extruder sleeve (103). Also obvious is the fact that in order to prevent damage to the extruder, when the discharge through the outlet nozzle (106) is blocked, it is necessary to suspend the supply of both pellets and blowing agent to the extruder sleeve (103) until the servovalve / solenoid valve (108) is activated again and the flow through the extruder nozzle (106) is allowed.

The return channel (107) preferably has the heater (110) which helps to prevent the plastic from setting in the return channel (107). Preferably, this return channel heater (110) is located along and on the outside of the return channel (107). Preferably, the heater (110) has means for maintaining a constant temperature, e.g. a thermostat.

Optionally, the return channel (107) can also have a driven screw which - after restarting the device and allowing flow through the outlet nozzle (106) - would be supposed to push the plastic out of the return channel (107) and back into the extruder sleeve (103).

Preferably, near the outlet nozzle (106), there are means for the levelling of the surface of the foamed plastic being deposited, especially a cutting or heating tool (111). This tool may be put into motion, e.g. rotational motion around the extruder outlet nozzle (106), e.g. using the smoothing tool drive (112). The means for the levelling of the surface of the foamed plastic being deposited may take the form of e.g. a cutter or a blunt element that cuts / scrapes off the surface of the plastic being deposited. In another preferable embodiment, the means for the levelling of the surface can take the form of a heating element which, by coming into contact with the plastic being deposited, would melt its surface thus smoothing it out. In yet another embodiment, the means for the levelling of the surface may include a radiation generator, e.g. a laser or a lamp. In such a case, the surface would be melted by intensive radiation - in such a configuration it is also possible to use optical means for measuring the correctness of surface levelling.

In an even different embodiment, the means for the levelling of the surface of the foamed plastic being deposited can take the form of a blower that would direct a stream of hot air onto the created structure. In such a configuration, it would be preferable to ensure means for measuring the correctness of surface levelling too, especially optical ones.

An additional, optional element of the device according to the invention may be a dye storage container or means for the supplying of dye from outside the device according to the invention. By supplying dye to the extruder sleeve (2, 103), the colour of the plastic being deposited can be modified, thus differentiating the structures being created by their intended use. For example, when creating a support/formwork intended for creating a topping beam for, e.g. a wide door, different shapes of such a support can be taken into account. The support (6) shown in Fig. 1 has a spatially complex shape (resembling the letter 'H' with the upper arms connected), but one can imagine a support shaped like an inverted 'U'. While creating such a support, the colour can be differentiated (but, just as well, the mechanical properties may be modified by changing the foaming pressure or even changing the substances), and a support can be created that will fill in the entire portal (by creating a temporary wall made of foamed plastic), where the part of the portal in the form of an inverted 'U' (lateral, vertical supports and the horizontal topping) may be coloured in one colour, and the remaining part (the middle part) may be coloured in another colour. Such marking may suggest that the inverted U-shaped part is a support that should remain untouched for a longer time, so that the concrete mortar can sufficiently harden. On the other hand, the remaining middle part, coloured in a different colour, could be removed earlier (e.g. cut out) in order to allow passage through the portal and performance of works on the other side of the portal.

Such differentiation between the purposes of specific parts of foamed plastic structures can be used freely and accordingly to the needs - e.g. when creating formwork for a wall, some of the plastic can be planned to remain as thermal insulation or moisture separation. It is also possible to use more than one colour to differentiate between more than two groups of structures - e.g. to indicate which structure is to be removed after a week, which after two weeks, and which after three.

Therefore, the extruder sleeve (2, 103) may be connected to a dye storage container / means for the supplying of dye from outside the device that will ensure the supply of one, two, three, four, or five dyes/paints/colours. Depending on the needs, an expert will be able to select the type of dye and the means for its delivery, using vibratory conveyors for dyes in powder form, or tanks with pumps/valves etc. for liquid dyes.

An additional, optional element of the device according to the invention may be a solvent spraying assembly. This assembly can constitute an important element of the device, especially when, e.g., it is necessary to ensure proper roughness/smoothing of the surface of the foamed plastic structures, or to increase adhesion between adjacent layers. Said assembly can take the form of any prior art means for the controlled spraying of substances, e.g. an atomizer combined with a solvent container and a pump.

An additional, optional element of the device according to the invention may be an air supplying assembly, especially with means for the heating and (possibly) cooling of the air stream. Such an assembly can speed up the hardening of foamed plastic structures, when the foamed thermoplastic material escaping from the extruder nozzle (106) is blown on with cool air. On the other hand, blowing with a hot stream of air can slow down the hardening process of the thermoplastic material while also smoothing the surface of the created su pport/formwork/structure.

Yet another optional, additional element of the device according to the invention can be a separation layer depositing assembly, especially in the form of a powder storage container and a vibratory conveyor, or a powder/liquid atomizer, especially a pneumatic one. This assembly would be supposed to create a layer which, for example, would make it easier to separate a given foamed plastic structure from any adjacent structures - be they made of concrete or other materials. The material that the separation layer consists of can be in powder (e.g. mineral aggregate) or liquid form (e.g. paint or lacquer).

With regard to the method for the creating of structures according to the invention, the supports and formworks are made of foamed plastics using the incremental technique. The material supplied to the device is plastic in pellet form, preferably polystyrene, which is taken from the storage container and plasticized at an increased temperature by the screw that rotates inside the heated sleeve. The sleeve has nozzles that supply a compressed blowing agent such as carbon dioxide, nitrogen, or another gas, liquid (e.g. fluoro-hydrocarbons, compressed freon), or supercritical liquid chemically inert to the plastic being foamed. The blowing agent is mixed with the plastic, after which the former partly dissolves and partly takes the form of small bubbles. The sleeve is ended with a tapered nozzle. As the mixture passes through the nozzle, the plastic gets physically foamed by the blowing agent dissolved in it, as well as by the expansion of the bubbles of the blowing agent. The expansion of the gas (or the supercritical liquid, e.g. in the case of carbon dioxide) also results in the rapid cooling of the foamed plastic being pushed out of the nozzle. If the blowing agent is a liquid which is a gas at room temperature and under atmospheric pressure, then, during the passage through the nozzle, the liquid mixed with the plastic boils consequently foaming the plastic with the thus created bubbles.

After the introduction of the blowing agent, and before being pressed out, the mixture may pass through an additional mixing chamber.

It is preferable to achieve a high pressure in the foaming part of the extruder, which pressure would allow to use a supercritical liquid as the blowing agent. It is obvious that, depending on the selected plastics and blowing agents, the pressures may vary - the range of the achieved pressures is from 1 to 250 bar, preferably from 3 to 200 bar, and, the most preferably, from 5 to 150 bar. For example, for carbon dioxide, the pressure is at least 73 bar.

The material is laid by means of the manipulator in a manner similar to that used in incremental FDM techniques - the foamed plastic comes out of the nozzle in a plastic state, and bonds with the base or with the previous layers. After a layer of the desired thickness has been laid (constant thickness for the whole layer, or variable thickness on its surface), the depositing of the next layer begins.

After the supports have been created, subsequent layers of the building are deposited in the incremental technique, possibly together with reinforcement. After the concrete has been hardened, the supports are fragmented and then crushed e.g. with a briquetting machine, in order to reduce the porosity, and fragmented for reuse.

It is preferable to replenish the stored pellets located above the device by means of pneumatic transport.

It is important to achieve the lowest possible waviness of the support's surface. Therefore, after the support/formwork/structure has been created, means for the levelling of the surface of the plastic are used, e.g., cutting, grinding, smoothing, melting by contact with a hot tool, radiation, or blowing with hot air.

The support-printing head can also be used to create the thermal insulation of a building. In this case, the deposited material can be inside or outside the concrete structure, and this material is not removed at the end of the building process.

Since the process for removing the supports is not always fully automated, it is preferable to make it easier to separate the support from the surface of the concrete. The separation can be made easier by spraying a separation layer onto the last layer of the support, using an integrated spraying head. The separation layer can be, for example, wax or water-soluble polyvinyl alcohol. In another preferable embodiment, the separation layer can be created by the depositing of dust or powder, e.g. mineral aggregate. Various types of paints and lacquers with smooth surfaces, which do not adhere to concrete, can be used as the separation layer too. A solvent can be sprayed in order to smooth the surface or to increase adhesion between layers.

In order to achieve faster hardening of the deposited foamed plastic, the device may have a nozzle that blows compressed air into the vicinity of the nozzle. A vortex tube may be applied in order to lower the temperature of the blown air. In order to increase adhesion, the surface of the support material in the vicinity of the nozzle may also be heated with hot air, which melts the layer being deposited - with the previous layer.

In order to adjust the physical properties of the supports/formworks/structures being created, it is possible to adjust the size of the bubbles of the plastic being foamed. By applying a higher pressure, the amount of gas dissolved in the plastic is increased (both gas dissolved in the liquefied plastic, and gas in the form of bubbles) - after leaving the extruder nozzle, this will cause the plastic to foam more, and the resulting bubbles solidified in the plastic will be larger. This will increase the share of gas in the structure being created, thus reducing its mass, but also reducing its strength. On the other hand, by applying lower pressure, smaller bubbles are obtained - therefore, there is a smaller share of gas in the structure and a larger share of the plastic itself which, in turn, may increase the mass of the structure and its mechanical strength. Thanks to the invention, it is possible to design and execute spatially complex structures, in which a part of the structure is created with the use of lower pressures (more durable parts, higher consumption of plastic) and another part with the use of higher pressures (less durable, lighter parts, less plastic-consuming), which would effectively consume less plastic than in the case of filling a given space with a uniform mass of foamed plastic, but which would achieve comparable or even better mechanical strength, necessary to support e.g. a ceiling that is being poured.

In contrast to the methods that involve chemical foaming of plastics, physical foaming makes it possible to:
- achieve a higher degree of foaming,
- achieve greater homogeneity of the blowing agent bubbles in terms of their size,
- achieve better control of the foaming process,
- use a wide range of materials.

Another optional aspect of the method according to the invention is to differentiate the purpose of individual parts of the structures being made of foamed plastics, by colouring the specific parts of the structure in a specific colour. By using a plastic of a single and, in principle, the same colour, it is not possible to easily indicate which part can already be removed and which cannot - the building art would suggest to wait until the poured concrete has hardened before removing any supports. However, when differentiating between the parts of foamed plastic structures using colours, it is possible, for example, to mark in red the particularly important elements that should not be removed too early (e.g. after less than a week), and - in yellow - elements which can be removed after only four days allowing earlier access to individual parts of the structure being created (be it for inspection purposes or to carry out further works). Due to the ability to create layers that would be useful after a structure has been erected (e.g. moisture separation layer, thermal insulation layer), it is possible to use practically any colours in combination with any type or purpose of the specific structure made of foamed plastic.

List of markings used in the drawing:
1 - pellets
2 - screw extruder sleeve
3 - extruder screw
4 - blowing agent feeding assembly, which feeds especially compressed gas
5 - smoothing element
6 - support/formwork/structure made of a foamed material
7 - nozzle that deposits the concrete mortar
8 - concrete structure
101 - storage container for / supply of the pellets
102 - motor/servomotor with or without a gear (preferably a planetary gear), which drives the screw extruder
103 - extruder sleeve
104 - extruder screw, preferably with a mixing section
105 - external heater, or heater located in the casing of the sleeve
106 - extruder nozzle / outlet nozzle
107 - extruder return channel
108, 109 - servovalve or solenoid valve of the return channel
110 - return channel heater
111 - smoothing tool, which uses e.g. cutting or melting
112 - smoothing tool drive (preferable)
113 - supply of the blowing agent in compressed, liquefied, or supercritical state
113 - supply of the blowing agent in compressed, liquefied, or supercritical state

## Claims

1. A device for the creating of supports, formworks, or structures made of foamed plastic, designed to be placed on a controlled manipulator, having means for the supplying of plastic, especially plastic in the form of pellets, such as a storage container, or means for pneumatic transport, a screw extruder sleeve, especially a heated one, an extruder screw, a blowing agent feeding assembly, and preferably an outlet nozzle located at the end of the extruder sleeve, wherein the blowing agent feeding assembly (4, 113) includes a compressor, possibly with a buffer tank, a pump, or means adapted to the supplying of the blowing agent from outside the device, where this assembly is adapted to the supplying of the blowing agent as compressed gas, liquid, or supercritical liquid, where the device is configured so that, under normal use, in the extruder sleeve (1, 103) the blowing agent is mixed with the plastic, and at the extruder outlet the blowing agent expands and the physical foaming of the plastic occurs, wherein the device further includes an outlet nozzle (106) placed at the end of the extruder sleeve (2, 103) **characterized in that** it further includes a return channel (107) whose one end connects with the extruder sleeve (2, 103) at a place before the outlet nozzle (106), as well as an extruder nozzle closing element.

2. The device according to claim 1 **characterized in that** it additionally has one or more of the following elements:
a dye storage container or means for the supplying of dye from outside of the device that are connected to the extruder sleeve (2, 103);a nozzle for depositing concrete mortar (7);
a solvent spraying assembly;
an air supplying assembly, which preferably has means for the heating and/or cooling of the air stream;
a separation layer depositing assembly, especially in the form of a powder storage container and a vibratory conveyor, or a pneumatic atomizer.

3. The device according to claim 1 or 2 **characterized in that** it has means for the levelling of the surface of the foamed plastic being deposited (5), especially in the form of a cutting or heating tool (111), where these means are preferably located near the end of the outlet nozzle (106).

## Patentansprüche

1. Vorrichtung zum Herstellen von Stützen, Schalungen oder Konstruktionen aus geschäumtem Kunststoff, bestimmt zum Aufsetzen auf einen gesteuerten Manipulator, mit Mitteln zur Zuführung von Kunststoff, insbesondere von Kunststoff in Form von Granulat, wie z.B. einem Vorratsbehälter, oder mit Mitteln für den pneumatischen Transport, einer Schnecken-Extruderhülse, insbesondere einer beheizten, einer Extruderschnecke, eine Treibmittelzuführungsbaugruppe, und vorzugsweise eine am Ende der Extruderhülse angeordnete Austrittsdüse, wobei die Treibmittelzuführungsbaugruppe (4, 113) einen Kompressor, gegebenenfalls mit einem Pufferbehälter, eine Pumpe oder eine Einrichtung zur Zuführung des Treibmittels von außerhalb der Vorrichtung umfasst, wobei diese Baugruppe zur Zuführung des Treibmittels als komprimiertes Gas geeignet ist, Flüssigkeit oder superkritischer Flüssigkeit, wobei die Vorrichtung so konfiguriert ist, dass bei normalem Gebrauch das Treibmittel in der Extruderhülse (1, 103) mit dem Kunststoff vermischt wird und am Extruderauslass das Treibmittel expandiert und das physikalische Aufschäumen des Kunststoffs erfolgt, wobei die Vorrichtung ferner eine Auslassdüse (106) aufweist, die am Ende der Extruderhülse (2, 103) angeordnet ist, **dadurch gekennzeichnet, dass** sie ferner einen Rücklaufkanal (107) aufweist, dessen eines Ende mit der Extruderhülse (2, 103) an einer Stelle vor der Auslassdüse (106) verbunden ist, sowie ein Extruderdüsen-Verschlusselement.

2. Die Vorrichtung nach Anspruch 1, **dadurch gekennzeichnet, dass** sie zusätzlich eines oder mehrere der folgenden Elemente aufweist:
einen Farbstoffvorratsbehälter oder Mittel zur Farbstoffzufuhr von außerhalb der Vorrichtung, die mit der Extruderhülse (2, 103) verbunden sind; eine Düse zum Aufbringen von Betonmörtel (7);
eine Lösungsmittel-Sprühvorrichtung;
eine Luftzuführungsbaugruppe, die vorzugsweise Mittel zum Heizen und/oder Kühlen des Luftstroms aufweist;
eine Vorrichtung zum Auftragen der Trennschicht, insbesondere in Form eines Pulverspeichers und eines Vibrationsförderers oder eines pneumatischen Zerstäubers.

3. Vorrichtung nach Anspruch 1 oder 2, **dadurch gekennzeichnet, dass** sie Mittel zur Nivellierung der Oberfläche des aufzuschäumenden Kunststoffs (5), insbesondere in Form eines Schneid- oder Heizwerkzeugs (111), aufweist, wobei diese Mittel vorzugsweise in der Nähe des Endes der Auslassdüse (106) angeordnet sind.

## Revendications

1. Un dispositif pour la création de supports, de coffrages ou de structures en mousse plastique, conçu pour être placé sur un manipulateur commandé, comportant des moyens pour l'alimentation en plastique, en particulier en plastique sous forme de granulés, tels qu'un conteneur de stockage, ou des moyens pour le transport pneumatique, un manchon d'extrudeuse à vis, en particulier chauffé, une vis d'extrudeuse, un ensemble d'alimentation en agent gonflant, et de préférence une buse de sortie située à l'extrémité du manchon d'extrudeuse, dans lequel l'ensemble d'alimentation en agent gonflant (4, 113) comprend un compresseur, éventuellement avec un réservoir tampon, une pompe, ou des moyens adaptés à l'alimentation en agent gonflant depuis l'extérieur du dispositif, où cet ensemble est adapté à l'alimentation en agent gonflant sous forme de gaz comprimé, de liquide ou de liquide supercritique, où le dispositif est configuré de telle sorte que, en utilisation normale, dans le manchon d'extrudeuse (1, 103), l'agent gonflant est mélangé avec le plastique, et à la sortie de l'extrudeuse, l'agent gonflant se dilate et le moussage physique du plastique se produit, où le dispositif comprend en outre une buse de sortie (106) placée à l'extrémité du manchon d'extrudeuse (2, 103), **caractérisé en ce que** il comprend en outre un canal de retour (107) dont une extrémité se raccorde au manchon d'extrudeuse (2, 103) à un endroit situé avant la buse de sortie (106), ainsi qu'un élément de fermeture de la buse d'extrudeuse.

2. Le dispositif selon la revendication 1, **caractérisé en ce que** il comporte en outre un ou plusieurs des éléments suivants :
un conteneur de stockage de colorant ou des moyens pour l'alimentation en colorant depuis l'extérieur du dispositif qui sont connectés au manchon d'extrudeuse (2, 103) ; une buse de dépôt de mortier de béton (7) ;
un ensemble de pulvérisation de solvant ;
un ensemble d'alimentation en air qui comporte de préférence des moyens de chauffage et/ou de refroidissement du flux d'air ;
un ensemble de dépôt de couches de séparation, notamment sous la forme d'un conteneur de stockage de poudre et d'un convoyeur vibrant, ou d'un pulvérisateur pneumatique.

3. Le dispositif selon la revendication 1 ou 2,**caractérisé en ce que** il comporte des moyens pour niveler la surface de la mousse plastique déposée (5), notamment sous la forme d'un outil de coupe ou de chauffage (111), ces moyens étant de préférence situés près de l'extrémité de la buse de sortie (106).
